# EUROPEAN PATENT APPLICATION

(11) **EP 2 525 575 A2**
(43) Date of publication of application: **21.11.2012**
(21) Application number: 11733058.9
(22) Date of filing: 12.01.2011
(51) Int. Cl.: H04N 7/26

(54) **PROCESSING METHOD AND DEVICE FOR VIDEO SIGNALS**

(30) Priority: 03.06.2010 US 351264 P; 25.05.2010 US 348212 P; 17.05.2010 US 345580 P; 12.01.2010 US 294438 P
(71) Applicant: LG Electronics Inc., Seoul 150-721 (KR)
(72) Inventor: PARK, Seung Wook, Seoul 137-724 (KR); PARK, Joon Young, Seoul 137-724 (KR); KIM, Jung Sun, Seoul 137-724 (KR); CHOI, Young Hee, Seoul 137-724 (KR); JEON, Yong Joon, Seoul 137-724 (KR); SUNG, Jae Won, Seoul 137-724 (KR); JEON, Byeong Moon, Seoul 137-724 (KR); LIM, Jae Hyun, Seoul 137-724 (KR)
(74) Representative: Katérle, Axel
(86) International application number: PCT/KR2011/000215
(87) International publication number: WO 2011/087271

(57) **Abstract**

Disclosed are a method and device for encoding or decoding video signals. The video signal processing method according to the present invention can enhance processing efficiency by using a structure whereby a single unit is recursively divided into a plurality of units. A method is provided in which bits can be used efficiency by hierarchically employing coding block pattern information under a unit structure able to be divided in this way. Further, residual data is rearranged so as to allow efficient coding by employing spatial distribution of the residual data.

## Description

### [Technical Field]

The present invention relates to a processing method and device for a video signal, and more particularly, to a video signal processing method and device for encoding or decoding a video signal.

### [Background Art]

Compression coding refers to a series of signal processing technologies for transmitting digitized information through a communication line, or for converting information into a form suitable for a storage medium. Objects of compression coding include voice, images, and characters, for example. In particular, technologies for performing compression coding on an image are referred to as video image compression. Compression coding for a video image is realized by removing surplus information in consideration of spatial correlation, temporal correlation, and probabilistic correlation, for example.

### [Disclosure]

### [Technical Problem]

One object of the present invention is to efficiently process a video signal by hierarchically partitioning a unit used for coding, prediction and transform, for example, into a plurality of sub units suitable for coding.

Another object of the present invention is to provide a method for efficient application of a skip mode to coding of a video signal and a syntax structure for the same. Transmitting coding information even to a partial region of a unit, to which a skip mode is applied, enables more accurate prediction.

Another object of the present invention is to enhance coding efficiency by employing spatial distribution characteristics of residual signals.

A further object of the present invention is to provide a method for efficiently transmitting coded block pattern information in the course of hierarchically partitioning a transform unit.

### [Technical Solution]

The present invention has been made in view of the above problems, and a processing method for a video signal according to the present invention employs a structure and method for recursively partitioning a single coding unit into a plurality of sub coding units. Also, in relation to this partitioning method, there is proposed a method for processing an edge region not included in the minimum size of the coding unit.

The processing method for a video signal according to the present invention proposes a method and syntax structure for permitting transmission of coding information to a predetermined region of a coding unit, to which a skip mode is applied, as occasion demands.

The processing method for a video signal according to the present invention proposes a method for reordering residual data to ensure that the residual data can be efficiently coded based on spatial distribution characteristics of the residual data. Additionally, there is proposed a method for applying a transform unit to enable transform between residual signals having similar characteristics.

The processing method for a video signal according to the present invention proposes a method in which bits can be used efficiently by hierarchically employing coded block pattern information under a unit structure that can be hierarchically partitioned.

### [Advantageous Effects]

The present invention provides effects and advantages as follows.

Firstly, in relation to processing a video signal, coding efficiency can be enhanced by employing various sizes of a coding unit other than a coding unit having a fixed size.

Secondly, as an image is partitioned in such a way that an edge portion of the image can be coded without padding, an unnecessary coding process or provision of additional information can be reduced, which results in further enhanced coding efficiency.

Thirdly, in relation to application of a skip mode, coding information can be additionally given to a predetermined region of a coding unit, to which a skip mode is applied, as necessary, which enables more accurate prediction.

Fourthly, in the course of coding residual data, transform between residual data having similar characteristics can be permitted within a single transform unit by reordering residual data based on spatial distribution characteristics thereof, or by employing a size of a transform unit suitable for the spatial characteristics.

Fifthly, under a unit structure that can be recursively partitioned, particular information, more particularly, coded block pattern information can be hierarchically employed. This proposes a variety of methods for efficiently utilizing bits per second upon employment of information, resulting in enhancement in coding efficiency.

### [Description of Drawings]

FIG. 1 is a schematic block diagram of a video signal encoding device according to an embodiment of the present invention.

FIG. 2 is a schematic block diagram of a video signal decoding device according to an embodiment of the present invention.

FIG. 3 is a view showing an example of partitioning a unit according to an embodiment of the present invention.

FIG. 4 is a view showing an embodiment of a method for hierarchically representing a partition structure of FIG. 3.

FIG. 5 is a view showing a variety of partitioning manners with respect to a predication unit according to an embodiment of the present invention.

FIGs. 6A to 6C are views showing different embodiments of a method for coding a partial region of a prediction unit to which a skip mode is applied.

FIGs. 7A to 7C are views showing different embodiments of coded blocks having different sizes and positions according to the present invention.

FIG. 8 is a view showing a procedure of generating residual signals and spatial distribution characteristics of the residual signals.

FIG. 9A is a block diagram showing a transformer of an encoder including a residual reordering unit and an inverse transformer of the encoder including a residual inverse reordering unit according to an embodiment of the present invention.

FIG. 9B is a block diagram showing an inverse transformer of a decoder including a residual inverse reordering unit according to an embodiment of the present invention.

FIG. 10 is a view showing distribution of residual signals before and after reordering according to an embodiment of the present invention.

FIGs. 11A to 11D are views showing different embodiments of a method for dividing and reordering blocks based on characteristics of an image according to the present invention.

FIGs. 12A and 12B are views showing different embodiments of a method for allotting transform units having different sizes according to the present invention.

FIG. 13 is a view showing partitioning of a coding unit into prediction units in different modes and edge regions of the respective prediction units.

FIG. 14 is a view showing a method for representing a coded block pattern with respect to a macro-block in an existing H.264/AVC codec.

FIGs. 15A to 18 are views showing different embodiments of a method for hierarchically representing a coded block pattern in the case in which a single coding unit is partitioned into a plurality of sub coding units according to the present invention.

### [Best Mode]

To achieve the above described objects, a processing method for a video signal according to the present invention includes acquiring partition information that indicates whether or not a transform unit is partitioned. If the partition information indicates that the transform unit is not partitioned, the method includes acquiring coded block pattern information on the transform unit, and performing inverse transform of the transform unit based on the coded block pattern information. Here, the coded block pattern information may be referred to as information that indicates whether or not the transform unit includes at least one non-zero transform coefficient level.

In the processing method for a video signal according to the present invention, if the partition information indicates that the transform unit is partitioned, the method may further include partitioning the transform unit into a plurality of lower-layer transform units. The width and height of the lower-layer transform units may be halves of the width and height of the transform unit.

Further, in the processing method for a video signal according to the present invention, if the partition information indicates that the transform unit is partitioned, the method may further include acquiring coded block pattern information on the transform unit. In this case, the coded block pattern information on the transform unit may indicate whether or not the transform unit includes at least one lower-layer transform unit having the non-zero transform coefficient level.

Furthermore, in the processing method for a video signal according to the present invention, the partition information may be acquired only when the transform unit can be partitioned. More particularly, the partition information may be acquired based on a result of confirming whether or not the transform unit can be partitioned based on any one of the position of the transform unit, the size of the transform unit, and the size of an image.

The coded block pattern information employed in the processing method for a video signal according to the present invention may be acquired with respect to each of a luminance signal and a chrominance signal.

In the processing method for a video signal according to the present invention, the inverse-transformed transform unit includes residual signals, and the method may further include reordering the residual signals according to a predefined order.

### [Mode for Intention]

Hereinafter, exemplary embodiments of the present invention will be described in detail with reference to the accompanying drawings. Prior to describe the present invention, it should be appreciated that the terms or words used in the specification and claims of the present invention are not interpreted using typical or dictionary limited meanings, and are constructed as meanings and concepts conforming to the technical sprit of the present invention based on the principle that the inventors can appropriately define the concepts of the terms to explain the present invention in the best manner. Accordingly, description of this specification and illustrations of the drawings are merely given as a most preferred embodiment of the present invention and are not intended to represent all technical ideas of the present invention. Therefore, it should be understood that various equivalents and modifications can exist which can replace the embodiments described at the time of application.

In the present invention, the terms may be interpreted based on the following criteria, and even terms not specified herein may be interpreted based on the following criteria. Coding may be interpreted as encoding or decoding as occasion demands, and information includes all of values, parameters, coefficients, elements, and the like. The meanings of these terms may be interpreted differently as occasion demands, and the present invention is not limited thereto. The term 'unit' has been used to refer to the basic unit of image processing or a particular position of an image, and may be used in the same meaning as the term 'block' or 'region', for example, as occasion demands. Also, in this specification, the term 'unit' may be a concept including all of a coding unit, a prediction unit, and a transform unit.

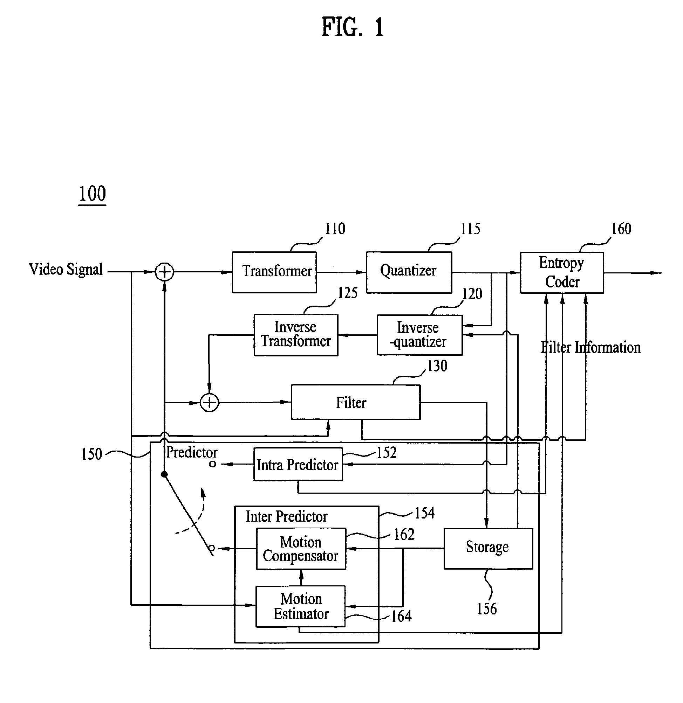

FIG. 1 is a schematic block diagram of a video signal encoding device according to an embodiment of the present invention. Referring to FIG. 1, the encoding device 100 of the present invention generally includes a transformer 110, a quantizer 115, a inverse quantizer 120, an inverse transformer 125, a filter 130, a predictor 150, and an entropy coder 160.

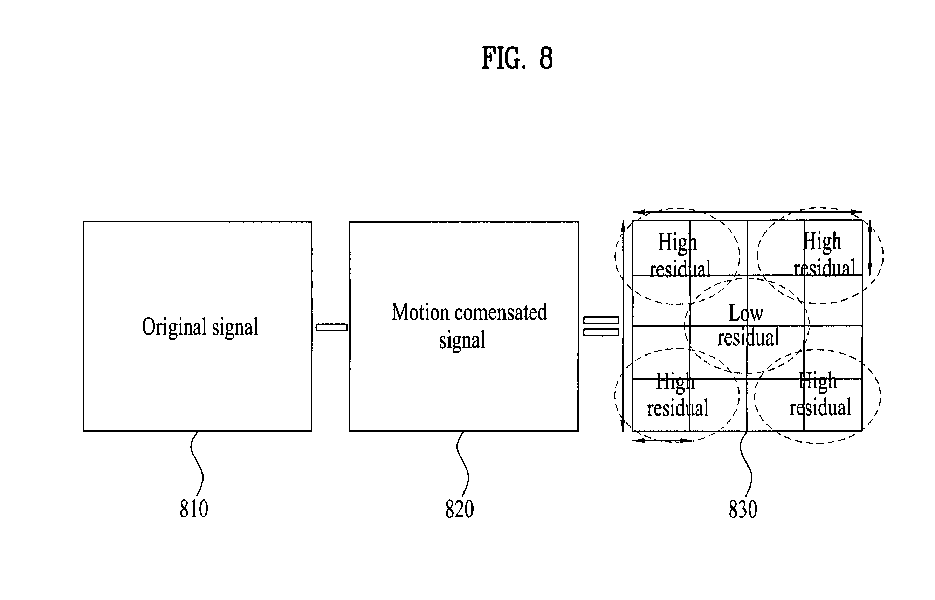

The transformer 110 acquires a transform coefficient value by transforming a pixel value for an input video signal. For example, Discrete Cosine Transform (DCT) or Wavelet Transform (WT) may be used. In particular, DCT is performed in such a way that an input video signal is partitioned into blocks having a constant size. In the case of DCT, coding efficiency may be changed according to distribution and characteristics of values in a transform region. Accordingly, in an embodiment of the present invention, in order to enhance transform efficiency, arrangement of data or the size of a transform region may be adjusted in the course of transform. The transform method will be described hereinafter in detail with reference to FIGs. 8 to 12B.

The quantizer 115 performs quantization of the transform coefficient value output from the transformer 110. The inverse quantizer 120 performs inverse-quantization of the transform coefficient value, and the inverse transformer 125 restores an original pixel value using the inverse-quantized transform coefficient value.

The filter 130 performs filtering for improvement in the quality of a restored image. For example, a de-blocking filter and an adaptive loop filter may be included. A filtered image may be output, or may be stored in a storage 156 so as to be used as a reference image.

To enhance coding efficiency, instead of directly coding an image signal, there is provided a method including the steps of predicting an image using a previously coded region, and acquiring a restored image by adding a residual value between an original image and the predicted image to the predicted image. An intra predictor 152 performs intra prediction within a current image, and an inter predictor 154 predicts a current image using a reference image stored in the storage 156. More specifically, the intra predictor 152 performs intra prediction from restored regions within a current image, and transmits intra coded information to the entropy coder 160. The inter predictor 154 may include a motion compensator 162 and a motion estimator 164. The motion estimator 164 acquires a motion vector value of a current region with reference to a particular restored region. The motion estimator 164 transmits position information of a reference region (e.g., a reference frame and a motion vector) to the entropy coder 160 to allow the position information to be included in a bit stream. The motion compensator 162 performs inter motion compensation using a motion vector value transmitted from the motion estimator 164.

The entropy coder 160 generates a video signal bit stream by entropy coding a quantized transform coefficient, inter coded information, intra coded information, and information on the reference region input from the inter predictor 154. The entropy coder 160 may employ, for example, Variable Length Coding (VLC) and arithmetic coding. In Variable Length Coding, input symbols are transformed into a continuous code word. The length of the code word may be variable. For example, symbols which frequently occur are represented by a short code word, and symbols which do not frequently occur are represented by a long code word. The variable length coding may be Context based Adaptive Variable Length Coding (CAVLC). In arithmetic coding, consecutive data symbols are transformed into a single decimal. The arithmetic coding may acquire an optimal decimal bit required to represent each symbol. The arithmetic coding may be Context based Adaptive Binary Arithmetic Coding (CABAC).

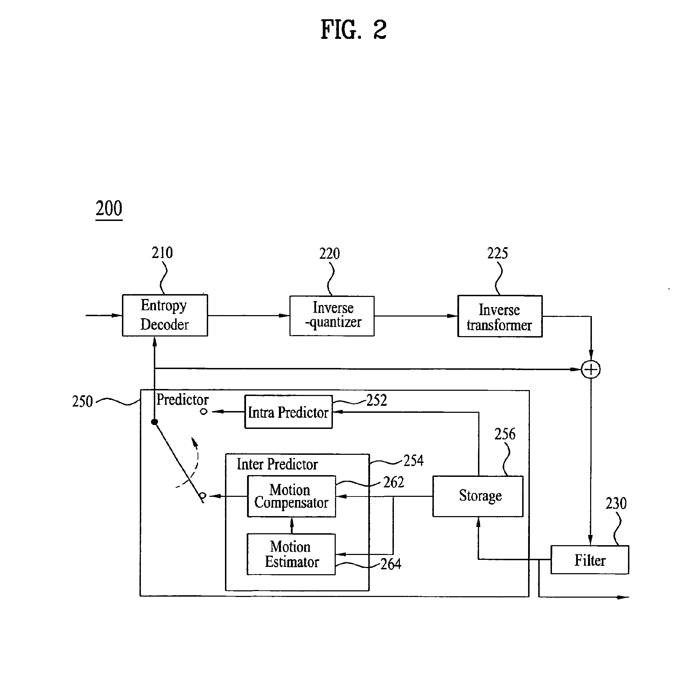

FIG. 2 is a schematic block diagram of a video signal decoding device 200 according to an embodiment of the present invention. Referring to FIG. 2, the decoding device 200 of the present invention generally includes an entropy decoder 210, a inverse quantizer 220, an inverse transformer 225, a filter 230, and a predictor 250.

The entropy decoder 210 extracts, for example, a transform coefficient and a motion vector with respect to each region by entropy decoding a video signal bit stream. The inverse quantizer 220 performs inverse-quantization of an entropy decoded transform coefficient, and the inverse transformer 225 performs restoration of an original pixel value using a inverse-quantized transform coefficient. In the decoder according to the embodiment of the present invention, spatial distribution of data to be coded may be reordered before transform of the data. If pixels in a transform region are reordered in the encoder before transform, restoration of the reordered pixels is necessary. This will be described hereinafter in detail with reference to FIGs. 8 to 12b.

The filter 230 achieves improvement in the quality of an image by performing filtering on the image. To this end, the filter may include a de-blocking filter to reduce block distortion and/or an adaptive loop filter to remove distortion of an image. The resulting filtered image may be output, or may be stored in a storage 256 so as to be used as a reference image for a next frame.

An intra predictor 252 performs intra prediction from a decoded sample within a current image. Operation of the intra predictor 252 in the decoder is equal to operation of the intra predictor 152 of the above described encoder.

An inter predictor 254 estimates a motion vector using a reference image stored in the storage 256 and generates a predicted image. The inter predictor 254 may include a motion compensator 262 and a motion estimator 264. The motion estimator 264 acquires a motion vector that represents a relationship between a current block and a reference block of a reference frame to be used in coding and transmits the motion vector to the motion compensator 262. Operation of the inter predictor 252 in the decoder is equal to operation of the inter predictor 152 in the above described encoder.

As a predicted value output from the intra predictor 252 or the inter predictor 254 and a pixel value output from the inverse transformer 225 are added to each other, a restored video frame is generated.

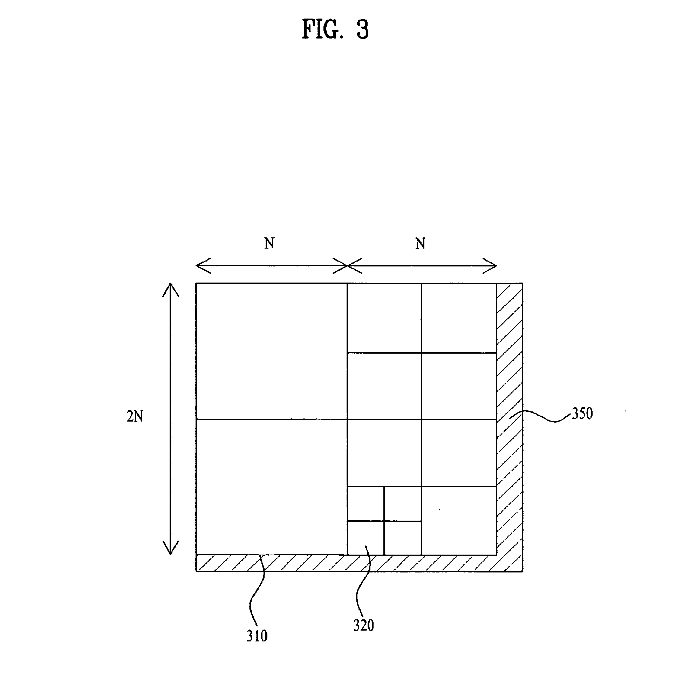

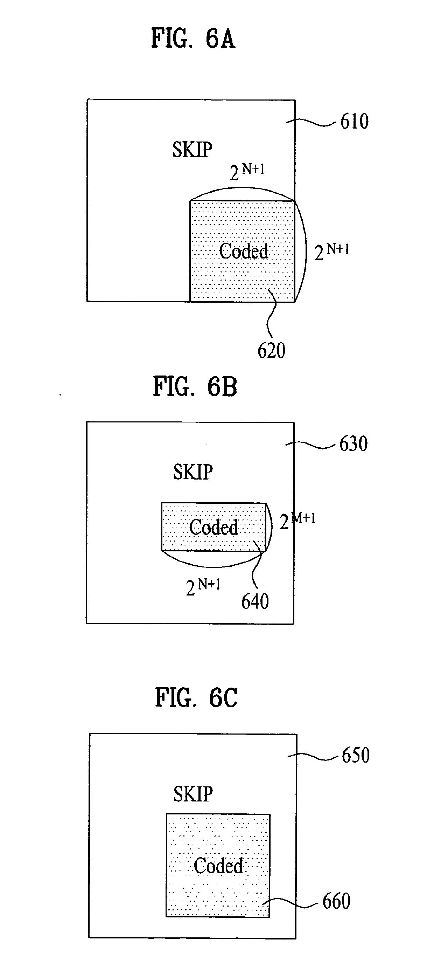

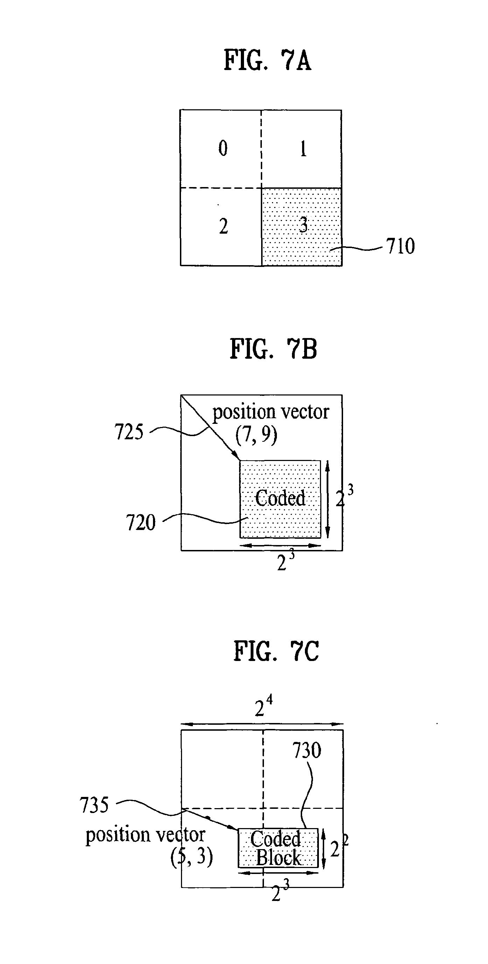

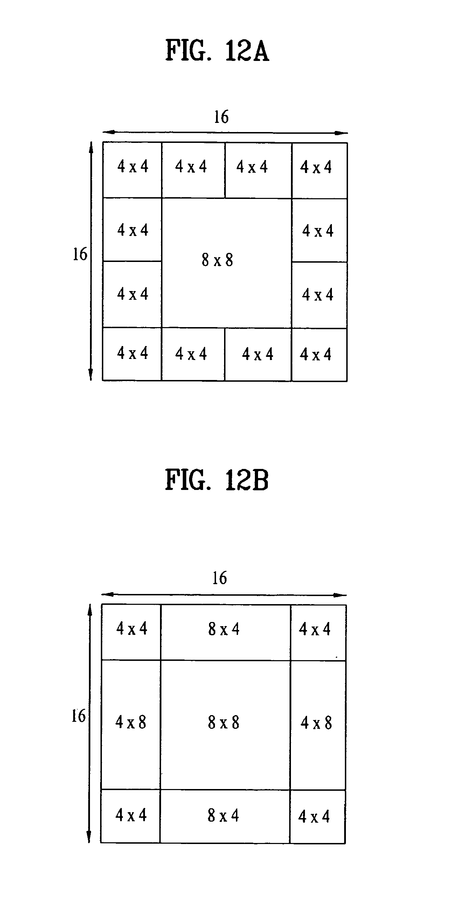

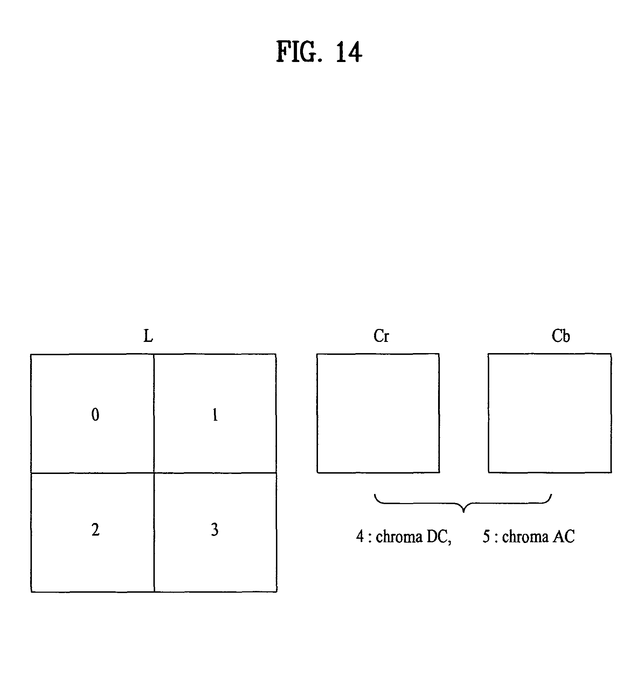

Hereinafter, in operation of the encoding device and the decoding device as described above, a method for partitioning, for example, a coding unit, a prediction unit, and a transform unit with reference to FIGs. 3 to 5, a method for coding a predetermined region in a skip mode with reference to FIGs. 6 and 7, a transform method based on spatial distribution of residual signals with reference to FIGs. 8 to 12b, and a recursive and effective use method of coded block pattern information with reference to FIGs. 14 to 18 will be described in detail.

A coding unit refers to a basic unit for processing an image in the above described video signal processing procedures, for example, intra/inter prediction, transform, quantization and/or entropy coding. The size of the coding unit to be used when coding a single image may not be constant. The coding unit may have a square form, and a single coding unit may be partitioned into a plurality of sub coding units.

FIG. 3 is a view showing an example of partitioning a coding unit according to an embodiment of the present invention. In one example, a single coding unit having a size of 2N x 2N may be partitioned into four sub coding units having a size of N x N. This partitioning of the coding unit may be recursively performed, and it is not essential that all coding units are partitioned to have the same shape. However, for the purpose of convenience in coding and processing, the size of the coding unit may be limited to within the maximum size designated by reference numeral 310, or the minimum size designated by reference numeral 320.

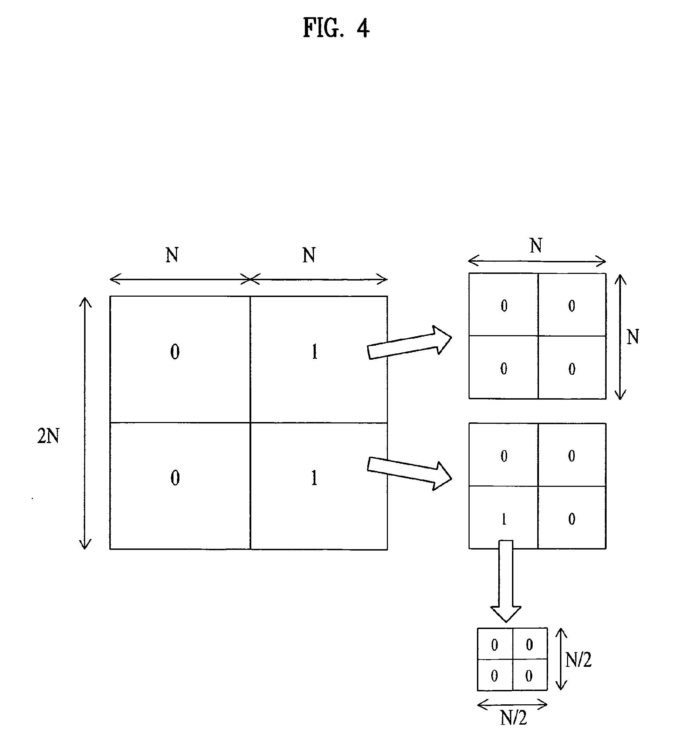

With respect to a single coding unit, information indicating whether or not the corresponding coding unit is partitioned may be stored. In one example, it is assumed that a single coding unit is partitioned into four square sub coding units as shown in FIG. 3. FIG. 4 shows an embodiment of a method for hierarchically representing a partition structure of the coding unit shown in FIG. 3 using values of 0 and 1. Information indicating whether or not the coding unit is partitioned may be allotted the value of '1' when the corresponding unit is divided, and may be allotted the value of '0' when the corresponding unit is not divided. As shown in FIG. 4, if a flag value representing whether or not partitioning occurs is 1, a block matching a corresponding node may not be further partitioned into four sub blocks. If the flag value is 0, the block may not be further partitioned and be subjected to a processing process with respect to the corresponding coding unit.

As will be appreciated, a block cannot be partitioned into four square regions. In this case, the partition information may be represented by mapping a code for a predefined partitioning method thereto. In one example of partitioning setting conditions, if a corresponding information value is 1, a corresponding block may be partitioned into two horizontal rectangular sub blocks, if a corresponding information value is 2, a corresponding block may be partitioned into two vertical rectangular sub blocks, and if a corresponding information value is 3, a corresponding block may be partitioned into four square sub blocks. This illustrates several examples of the partitioning method, and the present invention is not limited thereto.

The structure of the above described coding unit may be represented using a recursive tree structure. More specifically, assuming that a single image or the maximum size of a coding unit corresponds to a root node, the coding unit to be partitioned into sub coding units has child nodes equal in number to the partitioned sub coding units. Thus, the coding unit that is no longer partitioned becomes a leaf node. Assuming that only square partitioning of a single coding unit is possible, the single coding unit may be maximally partitioned into four sub coding units, and therefore a tree structure representing the corresponding coding unit may take the form of a quad-tree.

In the case of the encoder, it may select an optimal size of the coding unit in consideration of characteristics (for example, resolution) of a video image or coding efficiency. Information including the optimal size or information that can derive the optimal size may be included in a bit stream. In one example, the maximum size of the coding unit and the maximum depth of the tree structure may be defined. In the case of square partitioning, thus, it is possible to acquire the minimum size of the coding unit based on the above described information because the height and width of the sub coding unit matching a child node are halves of the height and width of the coding unit matching a parent node. Alternatively, inversely, assuming that the minimum size of the coding unit and the maximum depth of the tree structure are predefined, the maximum size of the coding unit may be derived from the predefined information as necessary. Since the size of the unit is changed to multiples of 2 in square partitioning, the actual size of the coding unit may be represented by a log value, the base of which is 2, to enhance transmission efficiency.

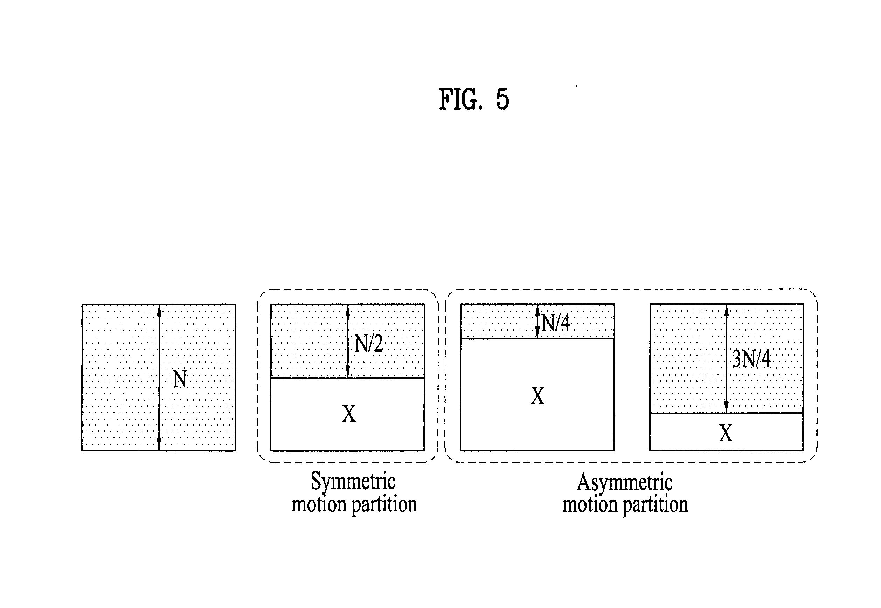

Image prediction (motion compensation) to enhance coding efficiency is performed on an object such as a coding unit that is not further partitioned (i.e. a leaf node of a coding unit tree). A basic unit for implementation of this prediction is referred to hereinafter as a prediction unit. Such a prediction unit may have various shapes. In one example, the prediction unit may have a symmetric shape, an asymmetric shape, or a geometrical shape, such as square and rectangular shapes. FIG. 5 shows several examples of a partitioning method for the prediction unit. A bit stream may include information indicating whether or not partitioning into prediction units occurs, or what is the shape of the partitioned prediction unit. Alternatively, this information may be derived from other information.

Meanwhile, transform for an image (for example, DCT) is performed differently from the prediction unit. Hereinafter, a basic unit for image transform is referred to as a transform unit. A transform unit for DCT, for example, normally has a square shape, and may be recursively partitioned similar to the above described coding unit. The transform unit may have the most efficient size defined based on characteristics of an image, and may have a size greater or less than the size of the prediction unit. However, in general, a single prediction unit may include a plurality of transform units. The structure and size of the transform unit may be represented similar to the above description with respect to the coding unit. In one example, a single transform unit may be recursively partitioned into four sub transform units, and the structure of the transform unit may be represented by a quad-tree shape. Also, information related to the structure of the transform unit may be represented by the depth of the transform unit and the size of the transform unit, for example, derived from the maximum height (or partition depth) of a preset transform unit tree, the maximum size of the transform unit, the minimum size of the transform unit, a difference between the maximum size and the minimum size of the transform unit, and/or log values thereof. In the meantime, the maximum partition depth of the transform unit may be changed according to a prediction mode of the corresponding unit. Also, the size of the coding unit that begins transform may have an effect on the size of the transform unit.

In the case of the decoder, it may acquire information indicating whether or not a current coding unit is partitioned. Enhanced efficiency may be accomplished by allowing the information to be acquired (transmitted) only under particular conditions. In one example, conditions for enabling partitioning of the current coding unit are that the sum of the sizes of current coding units is less than the size of an image and that the size of the current unit is greater than a preset minimum size of the coding unit. Thus, information indicating whether or not partitioning occurs may be acquired only under these conditions.

If the information indicates that the coding unit is partitioned, the size of the coding unit to be partitioned is a half of the size of the current coding unit, and the coding unit is partitioned into four square sub coding units on the basis of a current processing position. The above described processing may be repeated for each of the partitioned sub coding units. As mentioned above, it is not essential that the coding unit is partitioned into the square sub coding units. The coding unit that is not further partitioned is subjected to the above described processing procedures, such as, for example, prediction and transform.

Similarly, in relation to the transform unit, information indicating whether or not a current transform unit is recursively partitioned may be acquired. In one example, if the information indicates that the corresponding transform unit is partitioned, the corresponding transform unit may be recursively partitioned into a plurality of sub transform units. For example, if partition information is represented by '1', a transform unit may be divided into four sub transform units each having the width and height halves of the width and height of the transform unit. Similar to the above description in relation to the coding unit, enhanced decoding efficiency may be accomplished by allowing the partition information to be acquired (or transmitted) only under particular conditions. In one example, it is possible to confirm whether or not the current transform unit can be partitioned based on information, such as the position of the current transform unit, the size of the current transform unit, and/or the size of an image, for example. That is, conditions for enabling partitioning of the current transform unit are that the sum of the sizes of current transform units is less than the size of an image and that the size of the current transform unit is greater than a preset minimum size of the transform unit. Thus, information indicating whether or not partitioning occurs may be acquired only under the aforementioned conditions.

In the meantime, in the case of partitioning an image as described above, a situation in which the size of an image does not match the minimum size of a coding unit may occur. More specifically, in the case in which an image is partitioned into a plurality of coding units as shown in FIG. 3, an edge portion 350 of the image may remain. Thus, it is necessary to take a measure for removing the remaining edge portion of the image to conform to a designated size of the coding unit. In general, a method for padding the edge portion of the image by inputting an arbitrary value (for example, zero or a value equal to the number of peripheral pixels) depending on the size of the image may be used. However, this requires coding of a padding region, thereby causing deterioration in coding efficiency. Further, in the case of the decoder, this problematically requires cropping of the padding region other than an actual image region after decoding. Moreover, to perform cropping, it is necessary to transmit additional cropping information, which may result in deterioration in coding efficiency. Accordingly, it is necessary to determine the size of the coding unit depending on the number of pixels not allotted to the coding unit.

According to an embodiment of the present invention, the coding unit may be successively partitioned in an outskirt region depending on the number of remaining, non-allotted pixels regardless of the minimum size of the coding unit. In one example, in the case in which a certain number of pixels 'n', which is less than the number of pixels matching the minimum size of the coding unit, remain in the outskirt region (i.e. under the condition of x0 + cMin > picWidth or y0 + cMin > picHeight, here, x0 and y0 represent coordinates of a left upper end position of a current region to be partitioned, picWidth and picHeight respectively represent the width and height of an image, and cMin > n), the coding unit is successively partitioned until the number of pixels matching the size of the partitioned coding unit becomes `n'.

According to another embodiment of the present invention, partitioning may be performed to obtain a prediction unit that has a shape including the remaining region depending on the number of remaining pixels. As described above, FIG. 5 is a view showing a variety of partitioning manners with respect to a prediction block according to an embodiment of the present invention. Although the prediction block may be subjected to symmetrical partitioning, asymmetrical partitioning or geometrical partitioning is also possible. Accordingly, the encoder may select an appropriate partitioning manner such that the remaining region can be appropriately included in the partitioned region. Referring to FIG. 5, the partitioned edge portion is subjected to coding, whereas a region designated by X actually includes no data. Therefore, the encoder does not perform coding or transmission of information on this region. Similarly, the decoder may need not perform unnecessary decoding with respect to this region.

Although information indicating what shape a unit is partitioned into may be given additionally to the decoder, provision of this additional information may be unnecessary because the decoder can derive the kind of the prediction unit based on a predetermined rule. In one example, the kind of the prediction unit may be derived using information indicating whether or not a skip mode is present, information indicating a prediction mode, information indicating a partitioning method for the coding unit upon inter prediction, and/or information indicating whether or not the partitioned units may be merged.

Hereinafter, a processing method for a video signal with respect to motion vector prediction and motion compensation will be described.

Which prediction mode is to be used may be identified based on information contained in a header. In one example, prediction mode information PRED_MODE may indicate any one of an intra prediction mode MODE_INTRA, a direct prediction mode MODE_DIRECT, an inter prediction mode MODE_INTER, and a skip mode MODE_SKIP. In a particular case, it is possible to reduce the quantity of information to be transmitted by deriving the prediction mode information rather than transmitting the same. In one example, if no prediction mode information is received, in the case of an I picture, only an intra prediction mode is possible, and therefore the I picture may represent the intra prediction mode. Also, in the case of a P picture or a B picture, all the aforementioned modes may be applied, and therefore the Picture or the B picture may represent a predefined mode (for example, a skip mode).

A skip mode refers to a mode that employs a previously coded unit, other than motion information on a current prediction unit, upon restoration of the current prediction unit. Accordingly, in the case of the skip mode, other information except for information indicating a unit to be skipped (for example, motion information and residual information) is not transmitted. In this case, motion information required for prediction may be derived from neighboring motion vectors.

When using the skip mode, a pixel value of a reference region within a previously coded reference picture may be directly used. The pixel value of the reference block may entail motion compensation using a motion vector predictor. In relation to acquisition of the motion vector predictor, the current prediction block may include motion vector information when motion vector competition is employed.

If the information on the current prediction unit indicates that the current prediction block is coded in a skip mode, motion information on the current prediction block may be derived using motion information on a neighboring block. The neighboring block may refer to a block adjacent to the current prediction block.

In one example, a block adjacent to the left side of the current prediction block may be referred to as a neighboring block A, a block adjacent to the upper end of the current prediction block may be referred to as a neighboring block B, a block adjacent to the right upper end of the current prediction block may be referred to as a neighboring block C, and motion vectors thereof may be designated respectively by mvA, mvB and mvC. In this case, a motion vector predictor of the current prediction unit may be derived from center values of vertical and horizontal components of the motion vectors mvA, mvB, and mvC. The motion vector predictor of the current prediction unit may be employed as motion vectors of the current prediction block.

In the meantime, the motion information on the current prediction unit may be acquired based on motion vector competition. To adaptively employ motion vector competition, information indicating whether or not motion vector competition is employed may be acquired in the unit of a slice or in the unit of a prediction block. In one example, in the case in which the motion vector competition indication information specifies that motion vector competition is employed, the motion vector predictor is acquired based on motion vector competition. On the contrary, if the motion vector competition indication information specifies that motion vector competition is not employed, the motion vector predictor may be acquired from a motion vector of a neighboring block as described above.

For the purpose of motion vector competition, a candidate for a motion vector predictor with respect to the current prediction unit may be acquired. A motion vector of a spatially neighboring block adjacent to the current prediction unit may be employed as the motion vector predictor candidate. In one example, motion vectors of blocks adjacent to the left and right upper ends of the current prediction unit may be employed. Also, center values of horizontal and vertical components may be derived from motion vectors of the spatially neighboring blocks adjacent to the current prediction unit, and the center values may be included in the motion vector predictor candidate. A motion vector of a temporally neighboring block may also be included in the motion vector predictor candidate. The motion vector of the temporally neighboring block may be adaptively employed as the motion vector predictor candidate. In the meantime, temporal competition information that specifies whether or not the motion vector of the temporally neighboring block is employed in motion vector competition may be additionally employed. That is, the temporal competition information may be information that specifies whether or not the motion vector of the temporally neighboring block is included in the motion vector predictor candidate. Accordingly, even when motion vector competition is employed to acquire the motion vector predictor of the current prediction block, based on the temporal competition information, employing the motion vector of the temporally neighboring block as the motion vector predictor candidate may be limited. Since the temporal competition information assumes that motion vector competition is employed, acquisition of the temporal competition information may be possible only in the case in which the motion competition indication information indicates that motion vector competition is employed.

By means of the above described various motion vector predictor candidates, a motion vector competition list may be produced. The motion vector predictor candidates may be aligned in a predetermined order. In one example, the motion vector predictor candidates may be aligned in the order of center values derived from motion vectors of spatially neighboring blocks adjacent to the current prediction block, or in the order of motion vectors of spatially neighboring blocks adjacent to the current prediction block. Moreover, the motion vectors of the spatially neighboring blocks may be aligned in the order of the motion vectors of the neighboring blocks adjacent to a left end, an upper end and a right-upper end of the current prediction block. In addition, in the case in which motion vectors of temporally neighboring blocks are employed as the motion vector predictor candidates based on the temporal competition information, the motion vector predictor candidates may be added to the end of the motion vector competition list. The motion vector predictor candidates of the motion vector competition list may be specified by index information. That is, the motion vector competition list may consist of the motion vector predictor candidates and index information allotted to the motion vector predictor candidates.

The motion vector predictor of the current prediction unit may be acquired using the index information on the motion vector predictor candidate and the motion vector competition list. Here, the index information on the motion vector predictor candidate may refer to information that specifies the motion vector predictor candidate within the motion vector competition list. The index information on the motion vector predictor candidate may be acquired in the unit of a prediction unit.

Although the above described skip mode may achieve enhanced efficiency by reducing the amount of information to be transmitted, this may deteriorate accuracy because no information with respect to the corresponding unit is transmitted.

According to an embodiment of the present invention, it is possible to transmit coded information to a partial region of a unit to which a skip mode is applied. FIGs. 6A to 6C are views showing different embodiments of a method for coding a partial region of a prediction unit to which a skip mode is applied. Referring to FIGs. 6A to 6C, a skip mode may be applied to partial coding regions 610, 630 and 650, and partial regions 620, 640 and 660 may be coded to enable transmission of coding information. In this case, other prediction modes except for the skip mode, for example an inter prediction mode or an intra prediction mode, may be applied to the coded regions.

The size of the coded region is less than the size of the coding unit. In one example, as shown in FIG. 6A, if the coded region has a square shape, the size of the coded region may be represented by 2^{N+1} x 2^{N+1} (N>1). In this case, among information on a coding region, the size of the coding region may be simply represented by N. In another example, as shown in FIG. 6B, the coded region may have a rectangular shape. In this case, the size of the coded region may be represented by 2^{N+1} x 2^{M+1} (N>1, M>1). Also, among information on the coding region, the size of the coding region may be represented by (N, M). It is noted that the coded region has to be located at an edge of the coding unit. As shown in FIGs. 6B and 6C, the coded region may be located at a central portion of the coding region.

An additional syntax is necessary to determine whether or not or not to enable coding of a partial region in a skip mode or to define which region is coded. In one example, a sequence header may include, for example, flag information indicating whether or not to permit coding of a part of a skip region, and information indicating how many coding regions are to be permitted in a single skip mode coding unit. Also, in relation to each coding unit, the sequence header may include a flag that indicates whether or not a coding region is included in a part of a skip region of a corresponding unit, the number of coded regions, and start positions of the coded regions, for example. Of course, the information may be required only under the assumption that a skip mode can be partially coded. In relation to each coded region, the sequence header may include information indicating a prediction method (for example, whether an intra prediction or an inter prediction is employed), prediction information (a motion vector or an intra prediction mode), and residual data, for example. In particular, the position and size of the coded region may be represented in various ways as will be described hereinafter.

FIGs. 7A to 7C are views showing various method for showing the size and position of a coded region according to an embodiment of the present invention. A first method is to allot an index number to each coded region. Referring to FIG. 7A, it is assumed that a coded region is located at any one of four square sub regions obtained by partitioning a coding unit. Inherent index numbers may be allotted to the respective partitioned sub regions in an arbitrary sequence. As shown in FIG. 7A, numbers starting from 0 may be sequentially allotted from a left upper region, and thus the index number of a coded region 710 may be 3. In this case, since the coded regions are obtained by partitioning the coding unit in four, the size of the coded region may be determined from the size of the coding region. If there are one or more coded regions, several index numbers may be stored. According to an embodiment of the present invention, various partitioning manners other than quarter partitioning may be employed, and as necessary predetermined partitioning manners and index number allotment may be employed. Use of predetermined partition regions may advantageously eliminate transmission of other information except for index numbers.

A second method is to transmit a position vector and the size of a coded region. Referring to FIG. 7B, a coded region 720 may be represented by a position vector 725 that is a position relative to a left upper end point of a coded region. Also, as described above, the size of the coded region may be represented by 2^{N+1} x 2^{N+1} in the case of a square shape or by 2^{N+1} x 2^{M+1} in the case of a rectangular shape, and therefore only the value of N or the values of N and M may be stored and transmitted (for example, in FIG. 7B, the value N used to represent the size of the coded region is 2). Alternatively, there may be a method of permitting only a rectangular coded region having lengths of a particular ratio and transmitting only a diagonal length value.

A third method is to use index information on a reference point in order to reduce the magnitude of a position vector. Referring to FIG. 7C, the position of a coded region 730 may be represented using a position vector 735 that represents an index of reference coordinates, i.e. a position relative to corresponding reference coordinates. For example, as described above with reference to FIG. 7A, a coding unit may be partitioned into four regions such that index numbers are allotted to the respective regions, and the left upper end of a partitioned region where a left upper end position as a starting point of the coded region is present may be a reference position. Referring to FIG. 7C, the coded region may be located over the regions having the index numbers of 2 and 3, and may be spaced apart from the left upper end of the region, the index number of which is 2, by a distance of (5, 3). In this case, information to be stored includes the index number of 2 corresponding to the reference position, the position vector (5, 3) on the basis of the reference position, an index value (2, 1) that represents the size of the coded region.

In the case in which a current prediction block is not coded in a skip mode, the current prediction block may be coded into a direct prediction mode. The direct prediction mode refers to a mode that predicts motion information on the current prediction block using motion information of a completely decoded block. However, the current prediction block includes residual data, and thus is different from the skip mode.

Inter prediction may include forward prediction, backward prediction, and bi-prediction. Forward prediction is prediction using a single reference picture that is displayed (or output) temporally before a current picture, and backward prediction is prediction using a single reference picture that is displayed (or output) temporally after the current picture. To this end, a single piece of motion information (for example, a motion vector or a reference picture index) may be required. Bi-prediction may use two reference regions. The two reference regions may be present in the same reference picture, or may be individually present in different pictures. The reference pictures may be displayed (or output) before and after displaying the current picture. The bi-prediction may use two pieces of motion information (for example, a motion vector and a reference picture index).

A prediction unit to be coded in an inter mode may be partitioned in an arbitrary manner (for example, symmetrical partitioning, asymmetrical partitioning, or geometrical partitioning), and each partitioning may be predicted from a single reference picture or two reference pictures as described above.

Motion information on the current prediction unit may include motion vector information and a reference picture index. The motion vector information may refer to a motion vector, a motion vector predictor, or a differential motion vector, and may also refer to index information that specifies the motion vector predictor. The differential motion vector refers to a differential value between the motion vector and the motion vector predictor.

A reference block of the current prediction block may be acquired using the motion vector and the reference picture index. The reference block is present in a reference picture having the reference picture index. Also, a pixel value of the block specified by the motion vector may be employed as a predictor of the current prediction unit. That is, motion compensation for predicting an image of the current prediction unit by estimating motion from a previously decoded picture is employed.

When prediction of a current image is completed, along with the information on the predicted current image, a difference value between the predicted image and an actual image, i.e. a residual signal is coded and is included in a bit stream. FIG. 8 is a view showing a method for generating a residual signal from a motion compensated signal and spatial distribution of the residual signal. A residual signal 830 is acquired by subtracting a motion compensated signal 820 from an original signal 810. To perform coding of the residual signal, transform and quantization must be preceded. In general, the encoder may sequentially code a difference with a predictor starting from the left upper end of a transform unit based on the size of the transform unit. The decoder may restore the result and use the same in the same sequence.

However, considering distribution of the residual signal 830 in the case of inter prediction, as shown in FIG. 8, a situation in which a difference between the original signal and the predictor increases, i.e. the energy of the residual signal increases with increasing distance from the center of the unit may occur. If a high residual value and a low residual value are mixed in a single transform unit, this deteriorates coding efficiency. For this reason, according to an embodiment of the present invention, reordering of the residual signals may performed in such a way that the residual signals having similar characteristics, more particularly, having similar magnitudes of energy, are located spatially adjacent to each other.

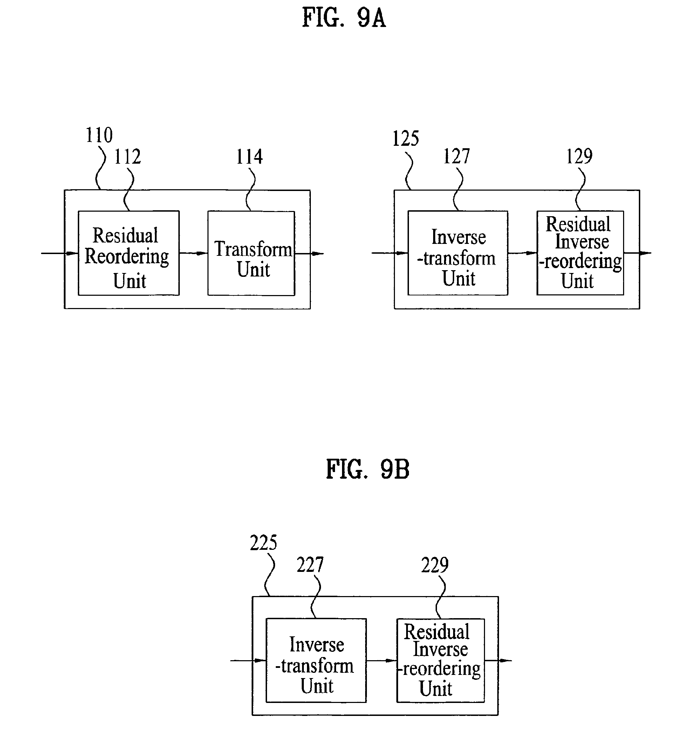

FIG. 9A is a block diagram showing the transformer 100 and the inverse transformer 125 of the encoder respectively further including a residual reordering unit 112 or a residual inverse reordering unit 129, and FIG. 9B is a block diagram showing the inverse transformer 225 of the decoder 200 further including a residual inverse reordering unit 229. The residual reordering unit 112 may perform reordering of residual values (or blocks) such that a high residual value and a low residual value are coded independently of each other. The residual inverse reordering units 129 and 229 may restore the reordered residual signals to original signals in the inverse order of the reordering sequence of the residual reordering unit. According to the embodiment of the present invention, the transformer 110 of the encoder includes the residual reordering unit 112 before a residual value transform unit 114. This allows residual signals having similar characteristics to be located spatially adjacent to each other, thereby achieving enhanced transform efficiency. Likewise, the inverse transformer 125 further includes the inverse reordering unit 129 after an inverse transform unit 127, thereby performing inverse reordering of the inverse transformed signals and returning the same into the spatial sequence of original signals. This inverse reordering may be performed in the inverse order of the reordering sequence of the transformer in the encoder.

In the inverse transformer 225 of the decoder according to an embodiment of the present invention, similar to the inverse transformer of the encoder, the inverse transform unit 227 acquires a transformed result of an input signal and the inverse reordering unit 229 reorders the transformed result in the inverse order of the reordering of the encoder, thereby acquiring an original image sequence.

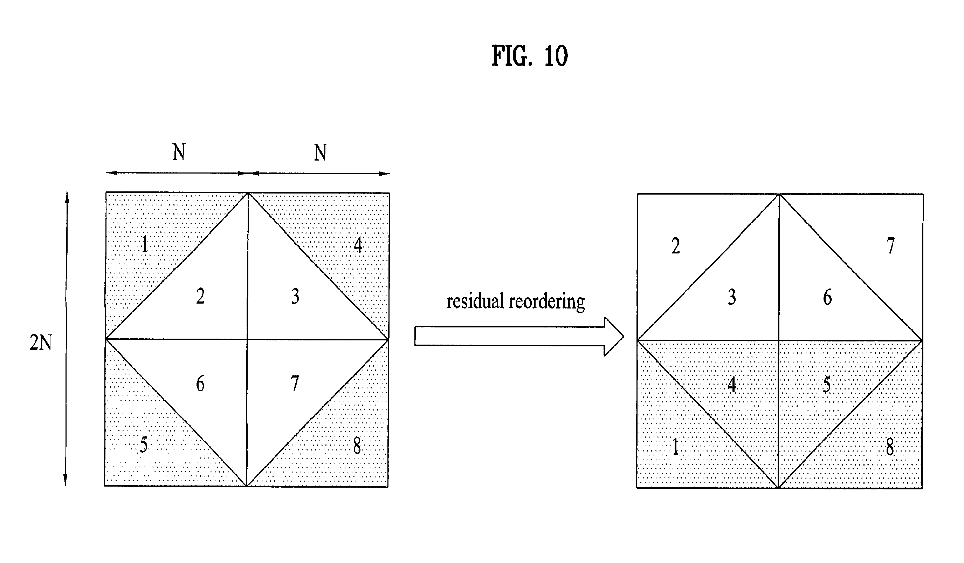

FIG. 10 shows distribution of residual signals after reordering according to an embodiment of the present invention. In one example, FIG. 10 shows distribution of residual values in the case in which a residual image of 2N x 2N in size is transformed using a transform unit of N x N in size. In FIG. 10, regions 1, 4, 5, and 8 have high residual values, and regions 2, 3, 6, and 7 have low residual values. Assuming that a single transform unit has a size of N x N, the regions 1 and 2, residual values of which have different characteristics, are transformed together. This may be equally applied in the case of regions 3 and 4, in the case of regions 5 and 6, and in the case of regions 7 and 8. Accordingly, according to the embodiment of the present invention, these regions may be reordered as shown in the right side of FIG. 10. In this way, the regions 2, 3, 6 and 7 having low residual values and the regions 1, 4, 5 and 8 having high residual values may be respectively coded into a single transform unit. However, it is noted that the reordering method shown in FIG. 10 is given according to an embodiment of the present invention, and the present invention is not limited thereto. Accordingly, in addition to the method as shown in FIG. 10, various other reordering methods may be employed so long as the regions having the same characteristics of residual values are included in a single transform unit.

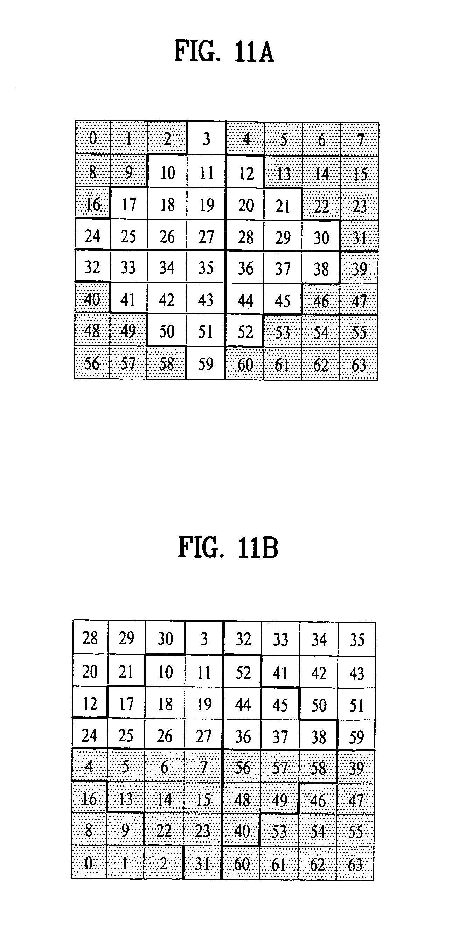

FIGs. 11A to 11D are views showing various embodiments of a method for dividing and reordering blocks based on characteristics of an image according to the present invention. In FIGs. 11A to 11D, a single small square represents one pixel. As described above with reference to FIG. 10, each pixel may be divided into eight blocks shown in FIG. 11A based on the characteristics of residual values. Hereinafter, for convenience of description, reference numerals corresponding to FIG. 10 are used.

FIG. 11B shows a reordering method according to an embodiment of the present invention. In FIG. 11B, the blocks are reordered via rotation or symmetric movement to make a block correspond to the size of a single transform unit while maintaining the shape of the divided blocks. The region 1 of FIG. 11B corresponds to the region 3 of FIG. 11A, the region 2 of FIG. 11B corresponds to the region 2 of FIG. 11A, the region 3 of FIG. 11B corresponds to the region 7 of FIG. 11A, the region 4 of FIG. 11B corresponds to the region 6 of FIG. 11A, the region 5 of FIG. 11B corresponds to the region 1 of FIG. 11A, the region 6 of FIG. 11B corresponds to the region 4 of FIG. 11A, the region 7 of FIG. 11B corresponds to the region 1 of FIG. 11A, and the region 8 of FIG. 11B corresponds to the region 8 of FIG. 11A.

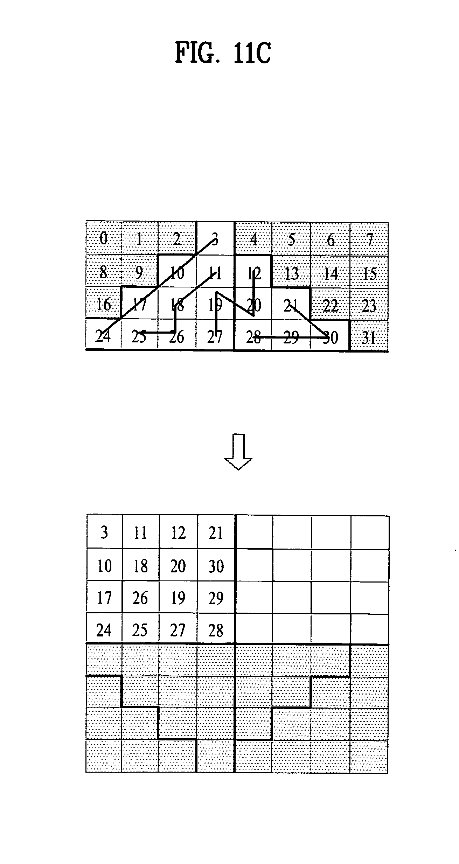

In the meantime, it is not essential to maintain the shape of the divided blocks. FIG. 11C show a procedure of appropriately transforming a divided triangular region to conform to a square region of a transform unit according to an embodiment of the present invention. With respect to regions 2 and 3 of FIG. 11A, pixels may be filled in regions 1 and 2 of FIG. 11C in a predetermined order. The other regions, for example, regions 6 and 7 of FIG. 11A may be filled in regions 3 and 4 of FIG. 11C, regions 1 and 4 of FIG. 11A may be filled in regions 5 and 6 of FIG. 11C, and finally regions 5 and 8 of FIG. 11A may be filled in regions 7 and 8 of FIG. 11C.

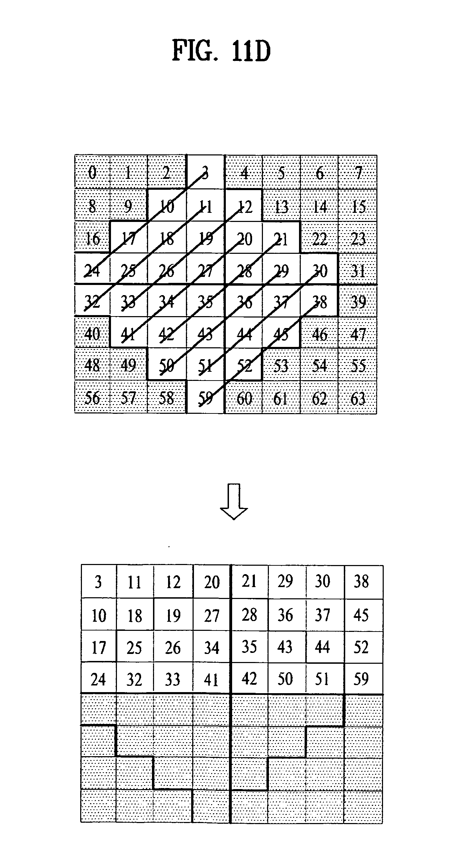

FIG. 11D shows an embodiment of the present invention in which a diamond region is appropriately transformed to conform to a square region of a transform unit. With respect to regions 2, 3, 6 and 7, pixels may be filled in regions 1, 2, 3 and 4 of FIG. 11D in a predetermined order. The other regions 1, 4, 5 and 8 of FIG. 11A may be filled in regions 5, 6, 7 and 8 in the same manner.

In the meantime, the above described method illustrates a reordering procedure for gathering residual signals having similar characteristics. If the decoder receives the reordered coded signals, the decoder must perform recording inversely with the above described reordering procedure before transforming the signals into original signals. The decoder may additionally receive information indicating whether or not the input signals are reordered.

The above described method is one example of a method for dividing and reordering pixels, and the present invention is not limited thereto. Various other embodiments may be conceivable. In particular, reordering residual values having similar characteristics adjacent to each other may advantageously enhance coding efficiency. The encoder may transmit information on the reordering manner, or may employ a previously promised reordering manner. The decoder may perform transform and inverse reordering using the information.

In another embodiment of the present invention, several sizes of transform units are employed to allow samples having similar residual energies to be coded within a single transform unit. More specifically, a large size transform unit is employed at a center portion having a low residual value, and a small size transform unit is employed at a peripheral portion having a high residual value, whereby signals having similar characteristics may be included in a single transform unit. FIGs. 12A and 12B are views showing an embodiment of allotment of transform units in the case in which different sizes of transform units are employed. Referring to FIGs. 12A and 12B, in an image having a size of 16 x 16, transform may be performed using different sizes of transform units, for example, transform units having a size of 4 x 4, 8 x 8, 4 x 8, or 8 x 4 based on a position thereof. However, it is noted that FIGs. 12A and 12B show one example in which different sizes of transform units are available, and different sizes of transform units may be arranged in different manners, and the present invention is not limited to the above described embodiment. Information on change in the size of the transform unit may be included in a bit stream, and may not be included based on a previous promise between the encoder and the decoder, in order to further enhance efficiency.

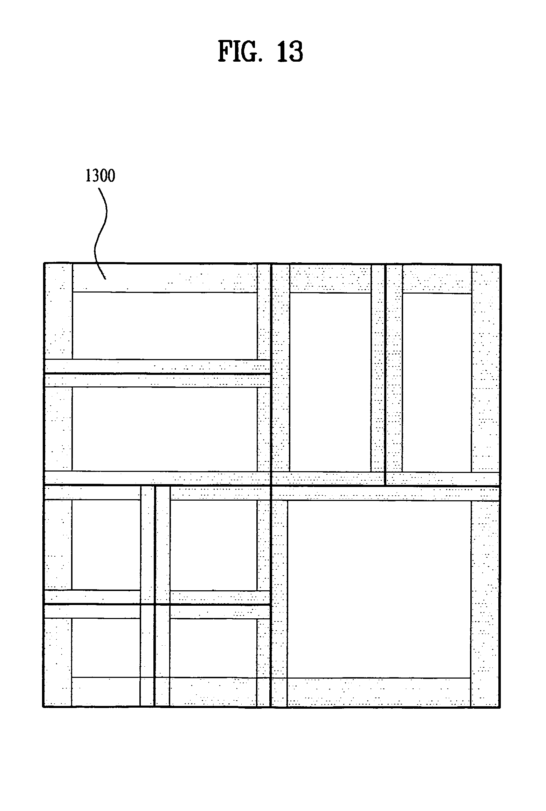

When the coding unit and/or the prediction unit is partitioned as described above, there is a high probability that an edge portion of a partitioned region exhibits a high residual value. FIG. 13 is a view showing prediction units respectively partitioned in different modes within the coding unit. A method of coding only a residual value of an edge region 1300 may be employed. As described above, since the size of a transform unit is independent of the size of a prediction unit, some regions may partially overlap each other so as not to conform to the size of the transform unit. In this case, dual residual coding may be performed, or a rectangular transform unit (having a size of 2 x 4 or 4 x 2, for example) may be applied only around the overlapped regions to prevent dual coding. Of course, the present embodiment may be expanded to applications employing a larger size transform unit.

A method for decoding the coding unit may include acquiring coded block pattern information. The coded block pattern information is employed to indicate whether or not a single coding unit includes a coded coefficient, i.e., a non-zero transform coefficient level. Accordingly, the coded block pattern information may be employed for inverse transform of a transform unit in the decoder.

FIG. 14 is a view showing a method for displaying a coded block pattern in a macro-block of an existing H.264/AVC codec. As shown in FIG. 14, in the H.264/AVC codec, 6 bits (including 4 bits for a luminance signal and 2 bits for a chrominance signal) may be used for a macro-block. In the case in which the size of a macro-block is 2N x 2N (for example, 16 x 16), 1 bit may be used per block in the size of N x N (for example, 8 x 8) with respect to a luminance signal. The coded block pattern information may have different values based on whether or not a corresponding block region includes a coded coefficient, that is, at least one non-zero transform coefficient level. For example, `1' is coded if the corresponding block region includes at least one non-zero transform coefficient level, and '0' is coded if the block region does not include the non-zero transform coefficient level.

In the meantime, in relation to a chrominance signal, information on Direct Current (DC) and Alternating Current (AC) components may be represented separately. In one example, in relation to the coded block pattern information corresponding to a DC component, '1' may be coded if a DC component of a chrominance signal Cr or Cb includes at least one non-zero transform coefficient level, and '0' may be coded if the DC component does not include the non-zero transform coefficient level. In another example, in relation to the coded block pattern information corresponding to an AC component, '1' may be coded if an AC component of a chrominance signal Cr or Cb includes at least one non-zero transform coefficient level, and '0' may be coded if the AC component does not include the non-zero transform coefficient level. In general, since the H.254/AVC codec employs the format of 4:2:0, the magnitude of a chrominance signal is a quarter that of a luminance signal, but the present invention is not limited thereto. If necessary, the luminance signal and the chrominance signal may have the same magnitude and may use the same quantity of information.

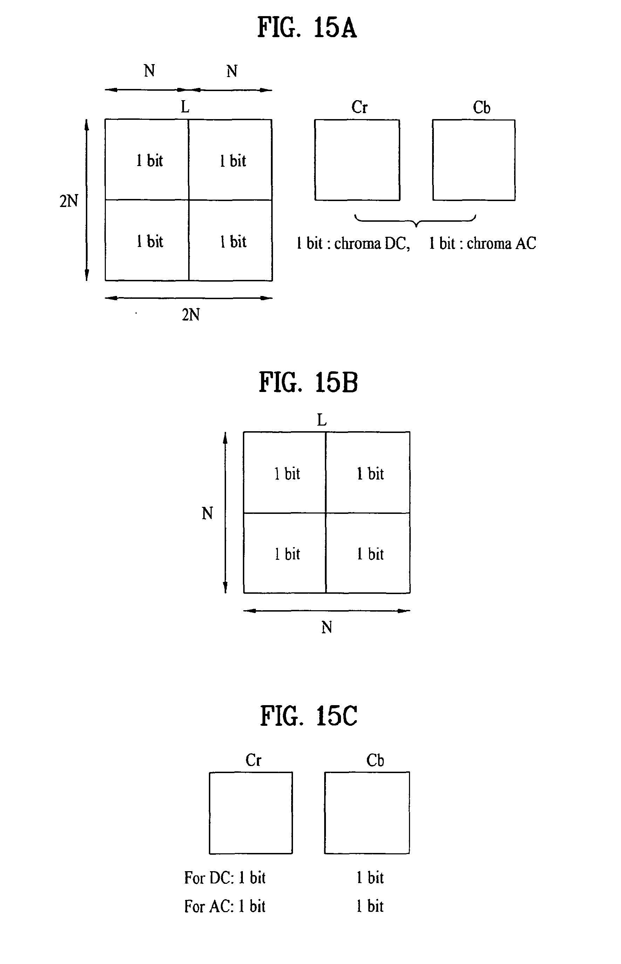

FIGs. 15A to 18 are views showing different embodiments of a method for hierarchically representing coded block patterns in the case in which a single transform unit may be partitioned into a plurality of transform units according to the present invention.

As shown in FIGs. 15A and 15B, it is assumed that a coding unit having a size of 2N x 2N may be partitioned into four transform units having a size of N x N. This partitioning may be recursively performed as described above. Hereinafter, for convenience of description, the case in which a single transform unit is partitioned into a plurality of sub transform units (for example, flag information indicates that partitioning occurs) is referred to as an upper layer, and the case in which the transform unit is not partitioned is referred to as a lower layer. Coded block pattern information of the upper layer indicates whether or not a corresponding transform unit includes at least one partitioned lower-layer transform unit having at least one coded coefficient, i.e. a non-zero transform coefficient level. In one example, if any one of the four partitioned lower-layer transform units included in the corresponding transform unit includes a non-zero transform coefficient level, '1' may be allotted to coded block pattern information for the corresponding transform unit. Also, '0' may be allotted to the coded block pattern information if the transform unit does not include the non-zero transform coefficient level. The coded block pattern information related to the lower layer indicates whether or not the corresponding transform unit includes a coded coefficient, i.e. at least one non-zero transform coefficient level. `1' may be allotted to the coded block pattern information if the non-zero transform coefficient level is present in the corresponding transform unit, and `0' may be allotted if the non-zero transform coefficient level is not present in the corresponding transform unit.

Upon partitioning of the transform unit, although additional information is not present under the corresponding coding unit if the coded block pattern information of the transform unit is 0, 4 bits may be additionally used if the coded block pattern information is 1. That is, as shown in FIG. 15B, 1 bit may be used to indicate whether or not each partitioned unit within a coding unit includes a coded coefficient.

In the meantime, in relation to a chrominance signal, information on Direct Current (DC) and Alternating Current (AC) components may be represented separately. In one example, with respect to the upper layer, in relation to the coded block pattern information corresponding to the DC component, `1' may be coded if the DC component of a chrominance signal Cr or Cb includes at least one non-zero transform coefficient, and '0' may be coded if the DC component does not include the non-zero transform coefficient. Likewise, in relation to the coded block pattern information corresponding to an AC component, '1' may be coded if the AC component of a chrominance signal Cr or Cb includes at least one non-zero transform coefficient, and `0' may be coded if the AC component does not include non-zero transform coefficient. With respect to the lower layer, additional information may be transmitted to each of the signals Cr and Cb. In one example, if the DC component is present in the upper layer (a bit related to the DC component is 1), it is necessary to confirm the coded block pattern information with respect to the lower layer. With respect to the lower layer, 1 bit is allotted to each of the signals Cr and Cb. `1' is allotted if a transform coefficient for the signal Cr is present, and '0' is allotted if the transform coefficient is not present. This method is similarly employed in relation to the AC component.

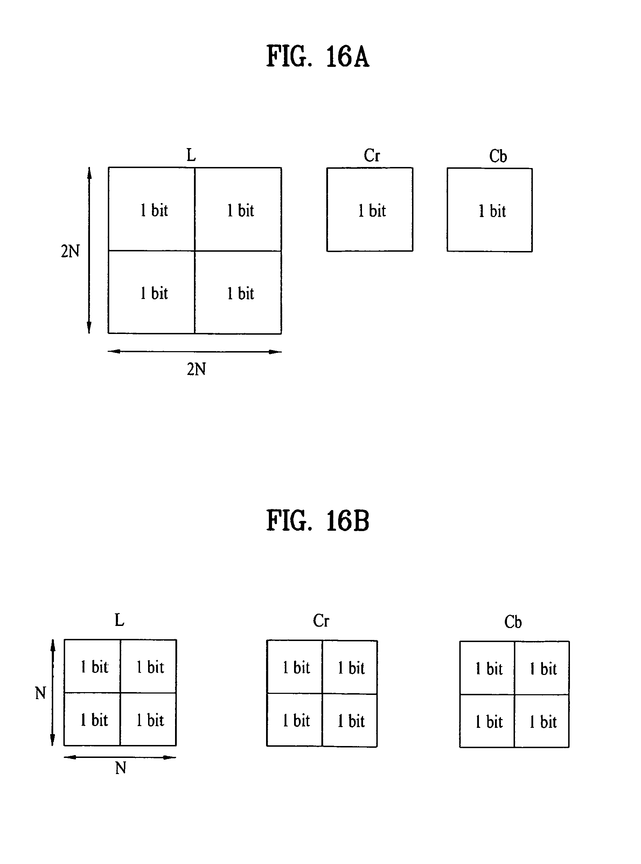

FIGs. 16 and 16b show a method for representing a recursively coded block pattern in the case in which a single coding unit can be divided into a plurality of sub coding units according to another embodiment of the present invention. With respect to a luminance signal, similar to the above description with reference to FIGs. 15A to 15C, coded block pattern information related to the upper-layer transform unit indicates whether or not the corresponding transform unit includes a non-zero transform coefficient in a corresponding region. Coded block pattern information related to the lower-layer transform unit indicates whether or not the corresponding transform unit includes a non-zero transform coefficient.

Even with respect to a chrominance signal, coded block pattern information may be represented in the same manner as the luminance signal. That is, as described above, coded block pattern information is allotted, in the same manner as the above described luminance signal, to each of the chrominance signals Cr and Cb without consideration of DC and AC components.

Considering the illustration of FIGs. 16A and 16B by way of example, a transform unit for a single luminance signal may be partitioned into four small transform units, and 1 bit may be allotted to each transform unit. The bit may include information indicating whether any one of the lower-layer transform unit includes a transform coefficient. Even in the case of the transform unit for the chrominance signal, likewise, 1 bit may be allotted based on the size of each partitioned transform unit. If coded block pattern information of the corresponding transform unit indicates that the transform coefficient is present (a corresponding bit is `1'), as shown in FIG. 16B, additional information indicating whether or not the lower-layer transform unit includes a transform coefficient may be acquired.

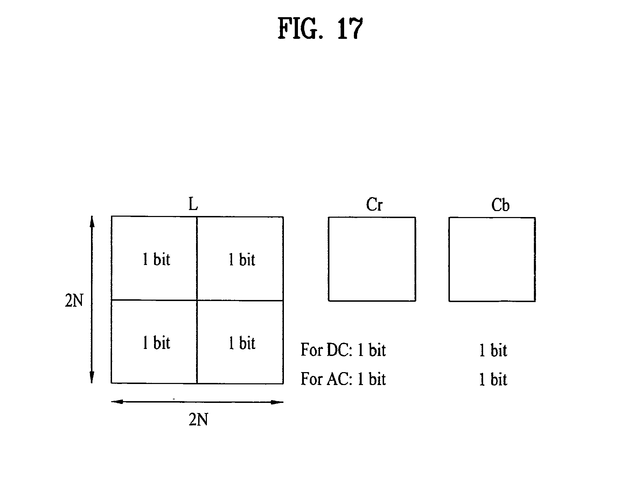

According to another embodiment of the present invention, as shown in FIG. 17, information only for a single transform unit may be included without consideration of partitioned layers. As shown in FIG. 17, information indicating whether or not all regions of the corresponding transfer unit include a coded coefficient, i.e. a non-zero transform coefficient level may be employed. Whether or not to store information on any one layer of the several partitioned layers may be appropriately selected according to coding efficiency. In one example, coded block pattern information about the highest layer including the largest transform unit may be stored, and coded block pattern information about the lowest layer, all the units of which are partitioned units (i.e. transform units located at leaf nodes of a transform unit tree structure) may be stored.

As described above in relation to the luminance signal with reference to FIGS. 15A to 15C, information on DC and AC components may be acquired respectively. Even in this case, similar to the above description, only coded block pattern information with respect to a particular layer may be stored.

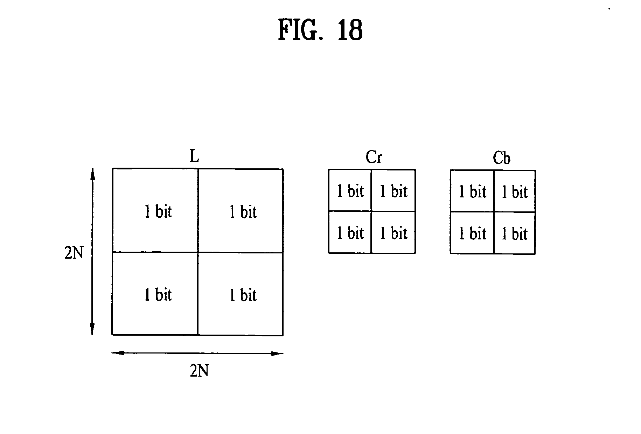

According to a yet another embodiment of the present invention, as shown in FIG. 18, information on a single transform unit may be included without consideration of a layer including partitioned units. As described above with reference to FIGs. 16A and 16B, information on the respective signals Cr and Cb may be acquired without distinguishing DC and AC components from each other. Referring to FIG. 18, information indicating whether or not a coded coefficient, i.e. a non-zero transform coefficient level is present in a corresponding transform unit region may be allotted to both the luminance signal and the chrominance signal. Whether or not to store information about any one layer of several partitioned layers may be determined in consideration of coding efficiency. In one example, coded block pattern information about the highest layer including the largest transform unit may be stored, and coded block pattern information about the lowest layer, all the units of which are partitioned units (i.e. transform units located at leaf nodes of a transform unit tree structure) may be stored.

The configurations and features of the present invention are combined in certain manners in the above described embodiments. Each configuration or feature must be considered selectively so long as there is no separate explicit mention. Also, each configuration or feature may be practiced in a form not combined with other configurations or features, and some configurations and/or features may be combined to construct the embodiments of the present invention. The sequence of operations described in the embodiments of the present invention may be changed. Some configurations or features of any one embodiment may be included in another embodiment, or may be replaced by a corresponding configuration or feature of another embodiment.

The decoding/encoding method according to the present invention may be realized in the form of a program, which can be executed via a computer and can be recorded in a computer readable recording medium, and multimedia data having a data structure according to the present invention may also be recorded in the computer readable recording medium. The computer readable recording medium may include all kinds of storage devices for storing data that can be read by a computer system. Examples of the computer readable recoding medium include a ROM, a RAM, a CD-ROM, a magnetic tape, a floppy disc, and an optical data storage device, for example, and may be realized in the form of a carrier wave (for example, transmission via the Internet). Also, a bit stream generated by the Encoding method may be stored in the computer readable recording medium, or may be transmitted through wired/wireless communication networks.

The embodiments according to the present invention may be realized via a variety of means, such as hardware, firmware, software, or combinations thereof, for example. In the case of using hardware, the above described embodiments may be realized using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro-processors, and electric units for implementation of other functions. In some cases, the embodiments described herein may be realized by a controller.

In the case of using software, procedures and functions according to the embodiments of the present invention may be realized through additional software modules. The respective software modules may perform at least one function and operation described herein. Software code may be realized through a software application that is written in an appropriate programming language. The software code may be stored in a memory and may be executed by a controller.

As described above, it will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents

### [Industrial Applicability]

The present invention may be applied to encoding or decoding of video signals.

## Claims

1. A decoding method for a video signal, the method comprising:
acquiring partition information indicating whether or not a transform unit is partitioned;
acquiring coded block pattern information with respect to the transform unit if the partition information indicates that the transform unit is not partitioned; and
performing inverse transform of the transform unit based on the coded block pattern information,
wherein the coded block pattern information is information indicating whether or not the transform unit includes at least one non-zero transform coefficient level.

2. The decoding method according to claim 1, further comprising partitioning the transform unit into a plurality of lower-layer transform units if the partition information indicates that the transform unit is partitioned.

3. The decoding method according to claim 2, further comprising acquiring coded block pattern information with respect to the transform unit if the partition information indicates that the transform unit is partitioned,
wherein the coded block pattern information with respect to the transform unit indicates whether or not the transform unit includes at least one lower-layer transform unit including the zero transform coefficient level.

4. The decoding method according to claim 2, wherein a width and a height of the lower-layer transform unit are halves of a width and a height of the transform unit.

5. The decoding method according to claim 1, further comprising confirming whether or not the transform unit can be divided using any one information among a position of the transform unit, a size of the transform unit, and a size of an image,
wherein the partition information is acquired if the transform unit can be divided.

6. The decoding method according to claim 1, wherein the coded block pattern information is acquired with respect to each of a luminance signal and a chrominance signal.

7. The decoding method according to claim 1,
wherein the inverse-transformed transform unit includes residual signals, and
wherein the decoding method further comprises reordering the residual signals in a predefined order.
